# EUROPÄISCHE PATENTSCHRIFT

(11) **EP 3 199 334 B1**
(45) Veröffentlichungstag und Bekanntmachung des Hinweises auf die Patenterteilung: **06.01.2021**
(21) Anmeldenummer: 17151994.5
(22) Anmeldetag: 18.01.2017
(51) Int. Cl.: B30B 11/08, B30B 15/32

(54) **RUNDLÄUFERTABLETTENPRESSE**
ROTARY PRESS FOR TABLETS
PRESSE ROTATIVE POUR COMPRIMÉS

(30) Priorität: 21.01.2016 DE 102016101027
(43) Veröffentlichungstag der Anmeldung: 02.08.2017
(73) Patentinhaber: Fette Compacting GmbH, 21493 Schwarzenbek (DE)
(72) Erfinder: Arning, Andreas, 21493 Talkau (DE); Petersen, Nils, 21522 Hohnstorf (DE)
(74) Vertreter: Hauck Patentanwaltspartnerschaft mbB

(56) Entgegenhaltungen:
- EP-A2- 1 688 243
- DE-A1- 2 450 065
- DE-A1- 3 639 918
- DE-A1-102013 202 975
- DE-B4-102005 062 715
- US-A1- 2012 135 100

## Beschreibung

Die Erfindung betrifft eine Rundläufertablettenpresse, umfassend einen drehend angetriebenen Rotor mit einer Matrizenscheibe mit Matrizenbohrungen und einer Mehrzahl von mit der Matrizenscheibe umlaufenden Ober- und Unterstempeln zum Erzeugen von Tabletten in den Matrizenbohrungen, wobei der Matrizenscheibe des Rotors ein Abstreifer zugeordnet ist, der in den Matrizenbohrungen erzeugte und durch die Unterstempel aus den Matrizenbohrungen ausgestoßene Tabletten von der Oberseite der Matrizenplatte in einen Gutkanal lenkt, wobei in Drehrichtung des Rotors vor dem Gutkanal ein Schlechtkanal angeordnet ist, dem eine Aussortiereinrichtung zum Aussortieren von Tabletten in den Schlechtkanal zugeordnet ist, wobei ferner eine Prüfeinrichtung an der Rundläufertablettenpresse angeordnet ist, welche mindestens eine Eigenschaft der in den Matrizenbohrungen erzeugten Tabletten überprüft und ein Schlechtsignal für eine Steuereinrichtung erzeugt, wenn die geprüfte Eigenschaft einer Tablette von einem Sollwert unzulässig abweicht, so dass die Steuereinrichtung die Aussortiereinrichtung zur Aussortierung der betreffenden Tablette betätigt.

In einer Rundläufertablettenpresse hergestellte Tabletten werden regelmäßig mittels eines Abstreifers von der sich unter dem Abstreifer hindurch drehenden Matrizenscheibe in einen Gutkanal gelenkt. Der Abstreifer kann beispielsweise eine sichelförmige Abstreifkante besitzen. Bekanntlich verpressen die Ober- und Unterstempel einer Rundläufertablettenpresse in die Matrizenbohrungen der Matrizenscheibe gefülltes pulverförmiges Material in den Matrizenbohrungen zu Tabletten. Nach dem Verpressen werden die Tabletten durch die Unterstempel aus den Matrizenbohrungen heraus auf die Oberseite der Matrizenscheibe geschoben, so dass sie durch den Abstreifer von der Matrizenscheibe abgestreift werden können.

Eine Prüfeinrichtung prüft während der Tablettenherstellung die Tabletten auf bestimmte Parameter. Beispielsweise kann durch eine Presskraftmesseinrichtung überprüft werden, ob die im Zuge des Verpressens der Tablette auftretende Presskraft in einem zulässigen Sollwertbereich liegt. Stellt die Prüfeinrichtung eine unzulässige Abweichung von einem Sollwert fest, erzeugt sie ein Schlechtsignal, welches an eine Steuereinrichtung, beispielsweise die Maschinensteuerung der Rundläufertablettenpresse, gegeben wird. Die Steuereinrichtung steuert dann die Aussortiereinrichtung zum gezielten Aussortieren der betreffenden Tablette an. Dazu kann die Aussortiereinrichtung als Auswerfdüse ausgebildet sein, die einen Gasstoß erzeugt, insbesondere einen Luftstoß, der die betreffende Tablette vor Erreichen des Abstreifers von der Matrizenscheibe in einen in Drehrichtung des Rotors vor dem Gutkanal angeordneten Schlechtkanal bläst.

Eine solche Rundläufertablettenpresse ist beispielsweise bekannt aus EP 1 688 243 B1. Dabei müssen die in den Schlechtkanal oder den Gutkanal gelangenden Tabletten weiter durch den Schlechtkanal bzw. den Gutkanal gefördert werden. Hierzu ist bei der aus EP 1 688 243 B1 bekannten Rundläufertablettenpresse jeweils eine Düsenanordnung für den Schlechtkanal und für den Gutkanal vorgesehen. Die Düsenanordnungen erzeugen einen Luftstrom in den Schlechtkanal bzw. in den Gutkanal, so dass die Tabletten durch den Schlechtkanal bzw. den Gutkanal abgefördert werden. Eine weitere Düsenanordnung ist vorgesehen, die einen zu einem Umlenkabschnitt des Abstreifers gerichteten Luftstrom erzeugt. Die Düsenanordnungen können dabei eine Reihe nebeneinander angeordnete Düsenöffnungen aufweisen, so dass ein Luftschleier bzw. Luftvorhang erzeugt wird.

Nachteilig ist bei der bekannten Rundläufertablettenpresse, dass die Düsenanordnungen zu Aufwirbelungen von Tablettenstaub und einer unerwünschten Kontamination der Rundläufertablettenpresse bzw. der Umgebung führen. Auch kann es bei schlecht rutschenden Tabletten zu einem Aufstauen von Tabletten und Produktionsunterbrechungen oder sogar Beschädigungen kommen. Der weitere Abtransport der Tabletten durch den Schlechtkanal bzw. den Gutkanal erfolgt in der Regel durch eine Ausbildung des Schlechtkanals bzw. des Gutkanals als abschüssige Rutsche, so dass die Tabletten schwerkraftunterstützt abtransportiert werden. Damit geht eine oftmals erforderliche Höhe der Tabletten für nachfolgende Bearbeitungsgeräte verloren. Auch ist eine eindeutige Detektion von aussortierten Schlechttabletten nicht immer gewährleistet. So wird beim Stand der Technik für die Detektion der aussortierten Schlechttabletten der Druckaufbau der jeweiligen Düsenanordnung überwacht. Es kann zu fehlerhaften Detektionsergebnissen kommen, wenn die Düsenanordnung beispielsweise durch aufwirbelnden Staub verstopft ist und hierdurch ein größerer Druck aufgebaut wird.

Aus US 8 801 416 A ist es bekannt, in einer Tablettenpresse hergestellte Tabletten durch Unterdruckeinrichtungen abzufördern. Dabei werden Tabletten von der Matrizenscheibe zunächst schwerkraftbedingt einem Tablettenreservoir zugeführt. Aus diesem Tablettenreservoir werden die Tabletten dann durch eine Unterdruckeinrichtung weitergefördert. Nachteilig bei der bekannten Tablettenpresse ist, dass beispielsweise bei einem Stopp der Presse lose Tabletten auf der Matrizenscheibe liegen bleiben können. Diese können bei einem anschließenden Wiederanfahren des Pressenbetriebs aufgrund ihrer Trägheit mit nachfolgend hergestellten Tabletten kollidieren und zu Tablettenstauungen führen. Außerdem ist der Aufbau mit einem Tablettenreservoir aufwendig.

Aus DE 36 39 918 A1 ist eine Rundläufertablettenpresse gemäss dem Oberbegriff des Anspruchs 1 bekannt, bei der in der Tablettierpresse gepresste Tabletten durch eine Führungswand aus der Nähe der Unterstempel entlang eines Ausstoßweges weggeführt werden. Die Tabletten werden weiter nach unten durch eine abwärts geneigte Wand zu einem ersten Ausstoßkanal abgelenkt und aus der Tablettierpresse abgegeben. Zurückgewiesene Tabletten werden vor Erreichen der Führungswand mithilfe eines pneumatischen Luftstrahls über eine Düse eines Pneumatikrohrs über einen Ausgang ausgestoßen. Dabei kann in einem Ausschussgatter ein Unterdruck in einem Ausschussbereich durch einen über eine obere Düse abgegebenen konstanten Luftstrom erzeugt werden.

Aus US 2012/0 135 100 A1 ist eine Tablettierpresse bekannt, bei der ein Staubsammler mittels Unterdrucks Staub von gepressten Tabletten absaugt ohne die Tabletten selbst abzusaugen.

Aus DE 10 2013 202 975 A1 ist ein Aussortieren von Tabletten über einen Luftstoß oder einen Schieber bekannt, wobei zur automatisierten Kontrolle der Aussortierung eine Detektiervorrichtung vorgesehen ist.

Ausgehend von dem erläuterten Stand der Technik liegt der Erfindung die Aufgabe zugrunde, eine Rundläufertablettenpresse der eingangs genannten Art bereitzustellen, bei der Tabletten in einfacher Weise in einen Schlechtkanal bzw. einen Gutkanal aussortiert werden können, ohne dass es zu unerwünschten Staubaufwirbelungen oder einer Kollision oder einem Aufstauen von Tabletten kommt. Auch sollen aussortierte Schlechttabletten eindeutig detektierbar sein.

Die Erfindung löst die Aufgabe durch den Gegenstand von Anspruch 1. Vorteilhafte Ausgestaltungen finden sich in den abhängigen Ansprüchen, der Beschreibung und den Figuren.

Die Erfindung löst die Aufgabe für eine Rundläufertablettenpresse der eingangs genannten Art dadurch, dass in dem Schlechtkanal eine erste Unterdruckeinrichtung derart angeordnet ist, dass durch die Aussortiereinrichtung in Richtung des Schlechtkanals geleitete Tabletten durch den von der ersten Unterdruckeinrichtung erzeugten Unterdruck durch den Schlechtkanal abgefördert werden, und dass in dem Gutkanal eine zweite Unterdruckeinrichtung derart angeordnet ist, dass durch den Abstreifer in Richtung des Gutkanals geleitete Tabletten durch den von der zweiten Unterdruckeinrichtung erzeugten Unterdruck von der Matrizenscheibe abgesaugt und durch den Gutkanal abgefördert werden.

Bei der erfindungsgemäß vorgesehenen Prüfeinrichtung kann es sich beispielsweise um eine Presskraftmesseinrichtung der Rundläufertablettenpresse handeln, die die im Zuge des Pressens der Tabletten erzeugte Presskraft misst. Bei der Steuereinrichtung kann es sich beispielsweise um die Maschinensteuerung der Rundläufertablettenpresse handeln. Wie eingangs erläutert, überprüft die Prüfeinrichtung mindestens eine Eigenschaft der hergestellten Tabletten, beispielsweise die im Zuge der Herstellung erzeugte Presskraft, und vergleicht diese Eigenschaft mit einem Sollwert. Wird eine unzulässige Abweichung von dem Sollwert festgestellt, gibt die Prüfeinrichtung ein entsprechendes Schlechtsignal an die Steuereinrichtung. Daraufhin steuert die Steuereinrichtung die Aussortiereinrichtung derart an, dass die betreffende, als schlecht erkannte Tablette in den Schlechtkanal geleitet wird. Bei der Aussortiereinrichtung kann es sich um eine Auswerfdüse handeln, die einen Gasstoß erzeugt, vorzugsweise einen Luftstoß, durch den auszusortierende Tabletten vor Erreichen des Abstreifers von der Matrizenscheibe in den Schlechtkanal geblasen werden. Es ist aber auch eine mechanische Aussortiereinrichtung denkbar, die auszusortierende Tabletten mechanisch in den Schlechtkanal leitet.

Erfindungsgemäß ist in dem Schlechtkanal eine erste Unterdruckeinrichtung und in dem Gutkanal eine zweite Unterdruckeinrichtung angeordnet. In Richtung des Schlechtkanals geleitete Tabletten werden durch den von der ersten Unterdruckeinrichtung erzeugten Sog durch den Schlechtkanal abgefördert. In Richtung des Gutkanals geleitete Tabletten werden durch den von der zweiten Unterdruckeinrichtung erzeugten Sog von der Matrizenscheibe abgesaugt und durch den Gutkanal abgefördert. Bei einer Unterdruckeinrichtung wird beispielsweise durch das Vorsehen einer Querschnittsverengung oder das ringförmige Einblasen eines Druckgases, beispielsweise von Druckluft, ein Unterdruck erzeugt. Aufgrund dieses Unterdrucks wird Gas, beispielsweise Luft, angesaugt und in Fließrichtung durch die weitere Kanalleitung mitgerissen. Dieses aufgrund des durch die Unterdruckeinrichtung erzeugten Sogs mitgerissene Gas, insbesondere Luft, fördert die Tabletten dann durch den Schlechtkanal bzw. den Gutkanal. Dabei werden insbesondere durch die in dem Gutkanal angeordnete zweite Unterdruckeinrichtung Tabletten bereits von der Matrizenscheibe abgesaugt und weiter durch den Gutkanal gefördert. Insbesondere können erfindungsgemäß durch die zweite Unterdruckeinrichtung sämtliche aus den Matrizenbohrungen ausgestoßenen Tabletten, die nicht durch die Aussortiereinrichtung in Richtung des Schlechtkanals abgelenkt wurden, in den Gutkanal gesaugt werden. Ein Springen von Tabletten wird sicher unterdrückt und bei einem Start bzw. einem Stopp der Rundläufertablettenpresse befinden sich keine losen Tabletten auf der Matrizenscheibe, so dass auch unmittelbar nach einem Pressenstart eine sichere Aussortierung erfolgen kann. Solche lose liegenden Tabletten könnten, unmittelbar nach einem Startvorgang, durch ihre Massenträgheit rückwärts rutschen und nachfolgende Guttabletten in ihrer Flussrichtung behindern.

Die Tabletten können insbesondere allein durch den von der jeweiligen Unterdruckeinrichtung erzeugten Sog abgesaugt und durch den Schlechtkanal bzw. den Gutkanal gefördert werden. Eine Schwerkraftunterstützung durch rutschenartig geneigte Kanäle ist aber auch denkbar. Selbstverständlich können für den Schlechtkanal und/oder den Gutkanal auch jeweils mehrere Unterdruckeinrichtungen vorgesehen sein.

Im Stand der Technik vorgesehene Düsenanordnungen zum Fördern der Tabletten durch den Schlechtkanal bzw. den Gutkanal können erfindungsgemäß entfallen. Dadurch werden die im Stand der Technik auftretenden Staubaufwirbelungen und Verschmutzungen vermieden. Vielmehr werden die Tabletten einschließlich etwaigen Tablettenstaubs abgesaugt und der Pressraum der Rundläufertablettenpresse bleibt sauber. Gleichzeitig wirken die Unterdruckeinrichtungen entionisierend und statische Aufladungen der Tabletten werden abgebaut. Die Tabletten werden in dem Schlechtkanal bzw. dem Gutkanal beschleunigt und vereinzelt, so dass Abstände zwischen den Tabletten größer werden. Dadurch wird ein Aufstauen von Tabletten sicher vermieden. Durch den vergrößerten Abstand zwischen den durch die Unterdruckeinrichtungen angesaugten Tabletten lassen sich auch Weichen zwischen einzelnen Tabletten problemlos schalten. Durch den Verlauf des Schlechtkanals bzw. des Gutkanals bzw. eines sich daran gegebenenfalls anschließenden Kanalleitungssystems kann ein jeweils erforderliches Höhenniveau für weitere Bearbeitungsgeräte variabel und in flexibler Weise eingestellt werden. Der Verbrauch an Gas, insbesondere Luft, durch die Unterdruckeinrichtungen ist dabei nicht größer als bei den aus dem Stand der Technik bekannten Düsenanordnungen. Der Tablettentransport kann beispielsweise mit einer Strömungsgeschwindigkeit der Luft von 6 bis 16 m/s erfolgen. Die Tablettenfördergeschwindigkeit ist dann etwas größer als die Umfangsgeschwindigkeit des Rotors der Rundläufertablettenpresse. Sie kann beispielsweise ca. 2 bis 3 m/s betragen.

Nach einer Ausgestaltung kann vorgesehen sein, dass die erste Unterdruckeinrichtung eine Venturi-Düse ist und/oder dass die zweite Unterdruckeinrichtung eine Venturi-Düse ist. Beispielsweise kann der Förderweg von in den Schlechtkanal geleiteten Tabletten durch eine Querschnittsverengung der ersten Venturi-Düse hindurch führen, so dass die Tabletten durch in dem Bereich der Querschnittsverengung angesaugtes Gas weiter durch den Schlechtkanal gefördert werden, und der Förderweg von in den Gutkanal geleiteten Tabletten kann durch eine Querschnittsverengung der zweiten Venturi-Düse hindurch führen, so dass die Tabletten durch in dem Bereich der Querschnittsverengung angesaugtes Gas weiter durch den Gutkanal gefördert werden. Die Tabletten werden also durch die Querschnittsverengung der Venturi-Düsen hindurch gefördert und von dem im Bereich der Querschnittsverengung angesaugten Gasstrom, insbesondere Luftstrom, mitgerissen und weitergefördert.

Der Gutkanal kann nach einer weiteren Ausgestaltung stromab der zweiten Unterdruckeinrichtung in einen Förderkanal münden. Der Förderkanal kann durch Förderrohre gebildet sein. Weiterhin kann der Förderkanal stromab der zweiten Unterdruckeinrichtung einen auf ein gegenüber der zweiten Unterdruckeinrichtung größeres Höhenniveau führenden Steigkanalabschnitt umfassen. Für die Verarbeitung der Tabletten in weiteren Geräten ist es oftmals erforderlich, die Tabletten auf eine gegenüber dem Tablettenablauf größere Höhe zu bringen. Diese Höhenförderung erfolgt bei der Erfindung in besonders einfacher Weise durch eine Unterdruckeinrichtung. Auf aufwendige, schwere und kostspielige spiralförmige Schwingförderer, wie beispielsweise bekannt aus DE 10 2005 062 715 B4, kann verzichtet werden. Darüber hinaus ist der Energiebedarf im Vergleich zu Schwingförderern gering und es werden Vibrationen vermieden, die Tablettenprüfgeräte, beispielsweise Tablettenwaagen, stören können. Die Förderung der Tabletten kann schneller erfolgen, so dass auch in einem nachfolgenden Tablettenprüfgerät gewonnene Messdaten schneller für eine Regelung der Rundläufertablettenpresse zur Verfügung stehen. Dies minimiert den Ausschuss.

An den Steigkanalabschnitt kann sich ein auf ein geringeres Höhenniveau führender Fallkanalabschnitt anschließen. Nach Erreichen des Fallkanalabschnitts können die Tabletten dann schwerkraftbedingt weitergefördert werden, insbesondere zu weiteren Geräten.

Mit dem Fallkanalabschnitt kann ein Absaugkanal verbunden sein, das wiederum mit einer Absaugpumpe verbunden ist, die über den Absaugkanal Gas, insbesondere Luft, aus dem Fallkanalabschnitt entgegen der Förderrichtung der Tabletten absaugt. Durch diese Ausgestaltung wird die Schwerkraftbewegung der Tabletten durch den Fallkanalabschnitt abgebremst. Das Abbremsen der Tabletten vermeidet eine zu starke schwerkraftbedingte Beschleunigung und eine damit verbundene Beschädigungsgefahr. Gleichzeitig erfolgt durch das Absaugen eine Vorabentstaubung der Tabletten. Der Absaugkanal kann insbesondere im Bereich des sich an den Steigkanalabschnitt anschließenden Beginns des Fallkanalabschnitts angeschlossen sein.

Der Förderkanal kann nach einer weiteren Ausgestaltung aus mehreren lösbar miteinander verbundenen Kanalabschnitten bestehen, wobei zumindest einige der Kanalabschnitte relativ zueinander verdrehbar sind. Diese Ausgestaltung erlaubt eine besonders einfache und flexible Anpassung des Förderkanals an die individuellen räumlichen Gegebenheiten. Sowohl die Länge und die jeweiligen Höhendifferenzen der Steig- und Fallkanalabschnitte, als auch die Ausrichtung der einzelnen Kanalabschnitte des Förderkanals können bei dieser Ausgestaltung in einfacher Weise variiert werden. Die Aufstellung der Rundläufertablettenpresse kann flexibler gestaltet werden und durch ein Verdrehen der beispielsweise einen kreisrunden Querschnitt besitzenden Kanalabschnitte können Tabletten nahezu zu allen Seiten gefördert und abtransportiert werden. Damit kann auf die räumlichen Gegebenheiten bei dem Betreiber der Rundläufertablettenpresse optimal eingegangen werden. Der Platzbedarf ist gering.

Der Förderkanal kann zu weiteren Bearbeitungsgeräten führen, beispielsweise einem Entstaubungs- und/oder Entgratungsgerät sowie einer oder mehreren Prüfeinrichtungen. Am Ende des Förderkanals kann sich ein Sammelbehälter zur Ausgabe von Guttabletten zur weiteren Verwendung, insbesondere Verpackung, befinden. Insbesondere kann der Förderkanal mit einem Tablettenentstaubungs- und/oder -entgratungsgerät verbunden sein, dem die durch den Förderkanal geförderten Tabletten zugeführt werden, wobei das Tablettenentstaubungs- und/oder -entgratungsgerät wiederum mit einem Sammelbehälter verbunden ist, dem durch das Tablettenentstaubungs- und/oder -entgratungsgerät geförderte Tabletten zugeführt werden. Das Tablettenentstaubungs- und/oder -entgratungsgerät kann ein mechanisches Entstaubungs- und/oder -Entgratungsgerät sein, beispielsweise ein Siebtrommel-Entstaubungs- und/oder -Entgratungsgerät. Herkömmliche Siebtrommel-Entgratungs- und/oder -Entstaubungsgeräte sind nur in der Lage, geringfügige Aufwärtsförderungen zu realisieren. Durch die erfindungsgemäße Kombination mit einer Unterdruckeinrichtung können solche Siebtrommel-Entstaubungs- und/oder -Entgratungsgeräte dennoch in einfacher Weise eingesetzt werden. Bei dem Entstaubungs- und/oder Entgratungsgerät kann es sich insbesondere um ein von der Anmelderin angebotenes Gratex-Gerät handeln. Ein solches Gerät besitzt eine rotierende Siebtrommel und sorgt damit für ein schonendes mechanisches Entstauben und Entgraten der Tabletten. Der Fallkanalabschnitt kann in das Entstaubungs- und/oder Entgratungsgerät münden, so dass die Tabletten dem Entstaubungs- und/oder Entgratungsgerät schwerkraftbedingt, lediglich abgebremst durch den von der Absaugpumpe gegenläufig erzeugten Gasstrom, zugefördert werden. Das Entstaubungs- und/oder Entgratungsgerät kann wiederum über einen weiteren, auf ein noch geringeres Höhenniveau führenden Fallkanalabschnitt mit einem Sammelbehälter für die auszugebenden und zur Weiterverarbeitung vorgesehenen Guttabletten verbunden sein, wobei die aus dem Entstaubungs- und/oder Entgratungsgerät kommenden Tabletten dem Sammelbehälter dann wiederum schwerkraftbedingt zugeführt werden.

Die Herstellkosten eines Siebtrommel-Entstaubungs- und/oder -Entgratungsgeräts liegen deutlich unter denen eines im Stand der Technik zur Entstaubung genutzten Schwingförderers. Die Siebtrommel dient gleichzeitig als Puffer, um beispielsweise bei einem Stromausfall sicherzustellen, dass keine unkontrollierten Tabletten in die Gutproduktion gelangen können. Auch kann im Zuge des Anfahrens eines Produktionsprozesses die Siebtrommel rückwärts drehen und gegebenenfalls noch auf der Siebtrommel befindliche Tabletten entgegen der Förderrichtung in einen Schlechtbehälter entleeren. Tabletten verlassen die Siebtrommel ausschließlich durch die mechanische Kraft der spiralförmigen Förderstrecke entgegen der durch die Absaugpumpe erzeugten Gasströmung, insbesondere Luftströmung. Dadurch wird ein Austreten von Staub vermieden. Bedienpersonen und der Pressenraum werden erheblich weniger kontaminiert.

Nach einer weiteren Ausgestaltung kann in dem Förderkanal eine Weiche angeordnet sein, über die Tabletten aus dem Förderkanal entnommen und einem mit der Weiche verbundenen Tablettenprüfgerät zugeführt werden können. Das Tablettenprüfgerät kann insbesondere stromab des Entstaubungs- und/oder Entgratungsgeräts angeordnet sein. Das Tablettenprüfgerät kann wichtige Tablettenparameter automatisiert messen, beispielsweise Gewicht, Dicke, Härte und Durchmesser. Es kann sich beispielsweise um ein von der Anmelderin unter dem Namen Checkmaster vertriebenes Tablettenprüfgerät handeln. Auf Grundlage der Messergebnisse des Tablettenprüfgeräts kann durch eine Regeleinrichtung Einfluss auf den Produktionsprozess der Rundläufertablettenpresse genommen werden.

Insbesondere die vorstehend erläuterten Siebtrommel-Entstaubungs- und/oder - Entgratungsgeräte besitzen optimale Entstaubungseigenschaften und eine sehr schnelle Durchlaufzeit. Entsprechend kann die Entnahme von Tablettenmustern für die Prüfung in dem verwendeten Prüfgerät stromab des Entstaubungs- und/oder Entgratungsgeräts erfolgen. Im Gegensatz zu einem spiralförmigen Schwingförderer können die Messergebnisse unter Minimierung von Ausschuss zur Regelung des Produktionsprozesses der Rundläufertablettenpresse insbesondere vor dem Hintergrund der geringen Durchlaufzeit genutzt werden. Bei der Verwendung von Schwingförderern ist es dagegen zur Vermeidung unnötigen Ausschusses oftmals erforderlich, dem Tablettenprüfgerät Tabletten stromauf des Schwingförderers zuzuführen. Die durch die noch nicht entstaubten Tabletten verursachte Staubbelastung stört allerdings die Betriebssicherheit des Tablettenprüfgeräts. Diese Nachteile werden bei der vorgenannten erfindungsgemäßen Ausgestaltung vermieden.

Es ist auch möglich, ein Metallprüfgerät in dem Förderkanal anzuordnen, welches Metallrückstände in Tabletten detektiert. Eine dem Metallprüfgerät in Förderrichtung nachgeordnete Weiche kann bei Detektion von Metallrückständen aktiviert werden, so dass die entsprechenden Tabletten einem Ausschussbehälter zugeführt werden.

Nach einer weiteren Ausgestaltung kann vorgesehen sein, dass der Förderkanal sowie ein gegebenenfalls vorgesehenes Entstaubungs- und/oder -Entgratungsgerät in einem gasdichten Isolierraum angeordnet sind, dessen Atmosphäre über eine Abluftleitung und eine Zuluftleitung ausgetauscht werden kann, wobei der Tablettenablauf der Rundläufertablettenpresse gasdicht mit dem Förderkanal verbunden ist. Über die Zuluftleitung und die Abluftleitung kann der Isolierraum bei Bedarf auch unter einen Unterdruck gegenüber der Umgebung gesetzt werden. Die gasdichte Verbindung des Tablettenablaufs mit dem Förderkanal kann eine aufblasbare Dichtung umfassen. Sofern der Förderkanal mit einem Sammelbehälter verbunden ist, ist diese Verbindung ebenfalls gasdicht. Auch ein Tablettenprüfgerät kann in dem Isolierraum angeordnet sein. Bei konventionellen Anordnungen mit einem Isolierraum sind zwischen dem Isolierraum und der Rundläufertablettenpresse üblicherweise Fensterklappen vorgesehen. Dadurch muss in aufwendiger Weise der Austausch der Atmosphäre für den Isolierraum und die Rundläufertablettenpresse getrennt vorgenommen werden. Durch eine direkte Ankopplung des Isolierraums an die Rundläufertablettenpresse, insbesondere durch eine aufblasbare Dichtung, kann der Isolierraum unmittelbar an die Rundläufertablettenpresse angedockt werden. Damit ist es möglich, die Atmosphäre des Isolierraums und die Atmosphäre der Rundläufertablettenpresse über eine gemeinsame Abluftleitung und eine gemeinsame Zuluftleitung gemeinsam auszutauschen. Auch können der Isolierraum und die Rundläufertablettenpresse dann gemeinsam unter einen Unterdruck gesetzt werden.

Nach einer weiteren Ausgestaltung kann vorgesehen sein, dass in dem Schlechtkanal eine erste Detektoreinrichtung angeordnet ist, die durch den Schlechtkanal geleitete Tabletten detektiert und/oder dass in dem Gutkanal eine zweite Detektoreinrichtung angeordnet ist, die durch den Gutkanal geleitete Tabletten detektiert. Die erste Detektoreinrichtung kann eine Lichtschranke umfassen und/oder die zweite Detektoreinrichtung kann eine Lichtschranke umfassen. Weiterhin kann die erste Detektoreinrichtung in der ersten Unterdruckeinrichtung angeordnet sein und/oder die zweite Detektoreinrichtung in der zweiten Unterdruckeinrichtung angeordnet sein. Bei den Lichtschranken kann es sich insbesondere um Rohrlichtschranken handeln. Wie eingangs erläutert, erfolgt im Stand der Technik ein Detektieren aussortierter Tabletten insbesondere über eine Überwachung des Druckaufbaus von zum Transport der Tabletten durch den Schlechtkanal bzw. den Gutkanal eingesetzten Düsenanordnungen. Wie ebenfalls eingangs erläutert, kann es beispielsweise bei einer Verstopfung der Düsenanordnungen zu fehlerhaften Detektionsergebnissen kommen. Außerdem besteht oftmals der Wunsch, eine redundante Detektion aussortierter Tabletten zu realisieren. Dies ist mit den vorgenannten erfindungsgemäßen Ausgestaltungen möglich. Durch den Einsatz einer Unterdruckeinrichtung wird Tablettenstaub wie eingangs erläutert abgesaugt. Dies gilt insbesondere innerhalb der Unterdruckeinrichtung in Strömungsrichtung direkt hinter dem Anschluss des Saugrohrabschnitts. Beispielsweise in diesem Bereich können Lichtschranken platziert werden, deren Optik dann jederzeit sauber bleibt, so dass diese durch die Unterdruckeinrichtung geförderte Tabletten zuverlässig detektieren können. Die Lichtschranke kann also in Strömungsrichtung des Gases bzw. der Luft durch die Querschnittsverengung der Unterdruckeinrichtung unmittelbar hinter dem Anschlussbereich des Saugrohrabschnitts für das durch den Unterdruck angesaugte Gas, insbesondere Luft, angeordnet werden. Indem sowohl in dem Schlechtkanal als auch in dem Gutkanal eine entsprechende Lichtschranke platziert wird, kann einerseits die durch den Schlechtkanal geförderte, aussortierte Tablette direkt detektiert werden. Andererseits kann in dem durch den Gutkanal abgeförderten Tablettenstrom eine der aussortierten Schlechttablette entsprechende Lücke detektiert werden, und damit indirekt die aussortierte Tablette. Damit ist eine zuverlässige redundante Überwachung der Tablettenaussortierung gewährleistet. Fehlerhafte Detektionsergebnisse durch verstopfte Düsenöffnungen sind ausgeschlossen. Ein weiterer Vorteil der bei dieser erfindungsgemäßen Ausgestaltung vorgesehenen Detektoreinrichtungen ist das Erkennen eines Tablettenstaus. Im Stand der Technik werden hierzu aufwendige kapazitive Staumelder eingesetzt. Durch den Einsatz der nach den vorgenannten Ausgestaltungen erläuterten Detektoreinrichtungen kann ein Tablettenstau einfach festgestellt werden, wenn die entsprechende Detektoreinrichtung, insbesondere Lichtschranke, keinerlei Unterbrechungen oder eine andauernde Unterbrechung detektiert.

Nach einer weiteren Ausgestaltung kann weiterhin eine Reinigungseinrichtung vorgesehen sein mit einer an den Gutkanal und/oder den Schlechtkanal und/oder die erste Unterdruckeinrichtung und/oder die zweite Unterdruckeinrichtung anschließbaren Reinigungsleitung und einer Reinigungsflüssigkeitsversorgung, über die der Reinigungsleitung eine Reinigungsflüssigkeit zur Reinigung zugeführt werden kann. Die Unterdruckeinrichtungen können dabei zur Unterstützung der Reinigungswirkung eingesetzt werden. So kann beispielsweise auch in den Pressraum der Rundläufertablettenpresse eingeleitete Reinigungsflüssigkeit von der Matrizenscheibe abgesaugt und aufgrund des Unterdrucks durch den Schlechtkanal und den Gutkanal gesaugt werden.

Die erfindungsgemäße Rundläufertablettenpresse kann weiterhin eine Unterdrucksteuereinrichtung umfassen, die den von der ersten Unterdruckeinrichtung erzeugten Unterdruck und den von der zweiten Unterdruckeinrichtung erzeugten Unterdruck steuert, wobei die Unterdrucksteuereinrichtung den von der ersten Unterdruckeinrichtung erzeugten Unterdruck und den von der zweiten Unterdruckeinrichtung erzeugten Unterdruck unabhängig voneinander, insbesondere also unterschiedlich einstellen kann. Die Unterdrucksteuereinrichtung kann weiterhin eine Speichereinrichtung umfassen, in der für bestimmte Betriebsarten, beispielsweise bestimmte zu verpressende Produkte, Soll-Unterdrücke für die erste und die zweite Unterdruckeinrichtung hinterleget sind. Die Unterdrucksteuereinrichtung greift dann abhängig von der jeweiligen Betriebsart auf die Speichereinrichtung zu und stellt die von der ersten bzw. zweiten Unterdruckeinrichtung erzeugten Unterdrücke auf den jeweils gespeicherten Wert ein. Auf diese Weise können die Unterdruckeinrichtungen besonders gezielt auf die jeweilige Anwendung eingestellt werden.

Bei der Rundläufertablettenpresse kann es sich um eine Mehrfachrundläufertablettenpresse, beispielsweise eine Doppelrundläufertablettenpresse, handeln. Es kann dann vorgesehen sein, dass sie mehrere Paare von Gutkanal und Schlechtkanal besitzt, wobei jedem Gutkanal ein Abstreifer und jedem Schlechtkanal eine Aussortiereinrichtung zum Aussortieren von Tabletten in den Schlechtkanal zugeordnet ist, wobei eine Steuereinrichtung auf Grundlage eines von einer Prüfeinrichtung erzeugten Schlechtsignals die jeweilige Aussortiereinrichtung zur Aussortierung der betreffenden Tablette betätigt, und wobei in jedem Schlechtkanal eine erste Unterdruckeinrichtung derart angeordnet ist, dass durch die jeweilige Aussortiereinrichtung in Richtung des jeweiligen Schlechtkanals geleitete Tabletten durch den von der jeweiligen ersten Unterdruckeinrichtung erzeugten Unterdruck durch den jeweiligen Schlechtkanal abgefördert werden, und dass in jedem Gutkanal eine zweite Unterdruckeinrichtung derart angeordnet ist, dass durch den jeweiligen Abstreifer in Richtung des jeweiligen Gutkanals geleitete Tabletten durch den von der jeweiligen zweiten Unterdruckeinrichtung erzeugten Unterdruck von der Matrizenscheibe abgesaugt und durch den jeweiligen Gutkanal abgefördert werden.

Bei einer Mehrfachrundläufertablettenpresse sind die üblicherweise zur Tablettenproduktion vorgesehenen Bearbeitungsstation, wie Füllstation, Pressstation, Auswurfstation, bekanntlich mehrfach ausgeführt, so dass im Zuge eines vollständigen Umlaufs des Rotors an den mehreren Gruppen von Prozessstationen Tabletten erzeugt werden. Durch das erfindungsgemäße flexible Förderkanalsystem mit eingesetzten Unterdruckeinrichtungen ist es dann beispielsweise möglich, in einfacher Weise aus mehreren Schlechtkanälen bzw. Gutkanälen Tabletten abzufördern. Diese können im weiteren Verlauf, insbesondere zur Verarbeitung in weiteren Bearbeitungsgeräten, zusammen geführt werden, so dass die Bearbeitungsgeräte nur einfach vorgesehen sein müssen. Es ist auch denkbar, dass die in der Mehrfachrundläufertablettenpresse erzeugten Tabletten einem gemeinsamen Gutkanal bzw. einem gemeinsamen Schlechtkanal zugeführt werden. Es ist somit in einfacher Weise die sogenannte Tablettenrumführung oder auch - zusammenführung realisierbar.

Ein Ausführungsbeispiel der Erfindung wird nachfolgend anhand von Figuren näher erläutert. Es zeigen schematisch:
- Fig. 1: eine erfindungsgemäße Rundläufertablettenpresse in einer schematischen, teilweise geschnittenen Ansicht,
- Fig. 2: eine teilweise geschnittene Ansicht von oben auf einen Teil der in Fig. 1 gezeigten Rundläufertablettenpresse,
- Fig. 3: einen Schnitt durch die Ansicht aus Fig. 2 entlang der Linie 2-2, und
- Fig. 4: einen Schnitt durch die Ansicht aus Fig. 2 entlang der Linie 3-3.

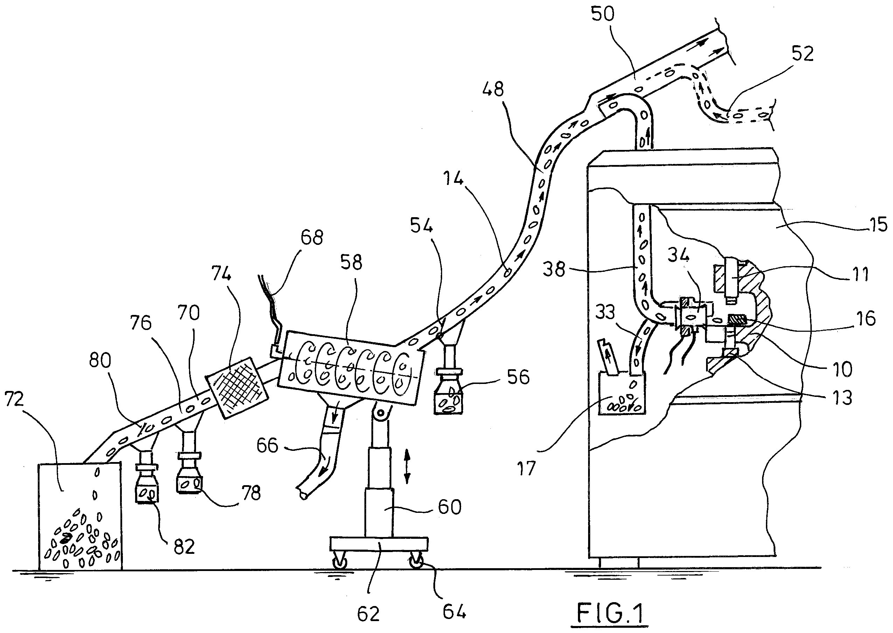

Soweit nichts anderes angegeben ist, bezeichnen in den Figuren gleiche Bezugszeichen gleiche Gegenstände. In Fig. 1 ist bei dem Bezugszeichen 15 ausschnittsweise ein Gehäuse der erfindungsgemäßen Rundläuferpresse in einer teilweise aufgeschnittenen Ansicht gezeigt. In dem Gehäuse 15 ist in an sich bekannter Weise ein durch einen Antrieb um eine vertikale Achse drehend angetriebener Rotor angeordnet. Der Rotor besitzt eine Matrizenscheibe 10. Die Matrizenscheibe 10 kann einstückig ausgebildet sein oder aus mehreren Ringsegmenten zusammengesetzt sein. Die Matrizenscheibe 10 weist eine Reihe von entlang einer Kreisbahn angeordneten Matrizenbohrungen 12 auf. Den Matrizenbohrungen 12 ist jeweils ein Paar aus Oberstempel 11 und Unterstempel 13 zugeordnet. In an sich bekannter Weise sind die Oberstempel 11 und die Unterstempel 13 in Oberstempelaufnahmen und Unterstempelaufnahmen axial geführt. Ihre im Zuge eines Umlaufs ausgeführte axiale Bewegung wird in ebenfalls an sich bekannter Weise durch geeignete Steuerkurven gesteuert. In einer nicht dargestellten Fülleinrichtung der Rundläuferpresse in die Matrizenbohrungen 12 gefülltes Pressmaterial wird in ebenfalls an sich bekannter Weise in mindestens einer Pressstation der Rundläuferpresse durch die Oberstempel 11 und Unterstempel 13 in den Matrizenbohrungen 12 zu Tabletten verpresst. Die Matrizenbohrungen 12 können durch in die Matrizenscheibe 10 lösbar eingesetzte Matrizen gebildet sein. Es ist jedoch auch denkbar, dass die Ober- und Unterstempel der Rundläufertablettenpresse zur Erzeugung von Tabletten unmittelbar mit den Matrizenbohrungen 12 der Matrizenscheibe 10 zusammenwirken.

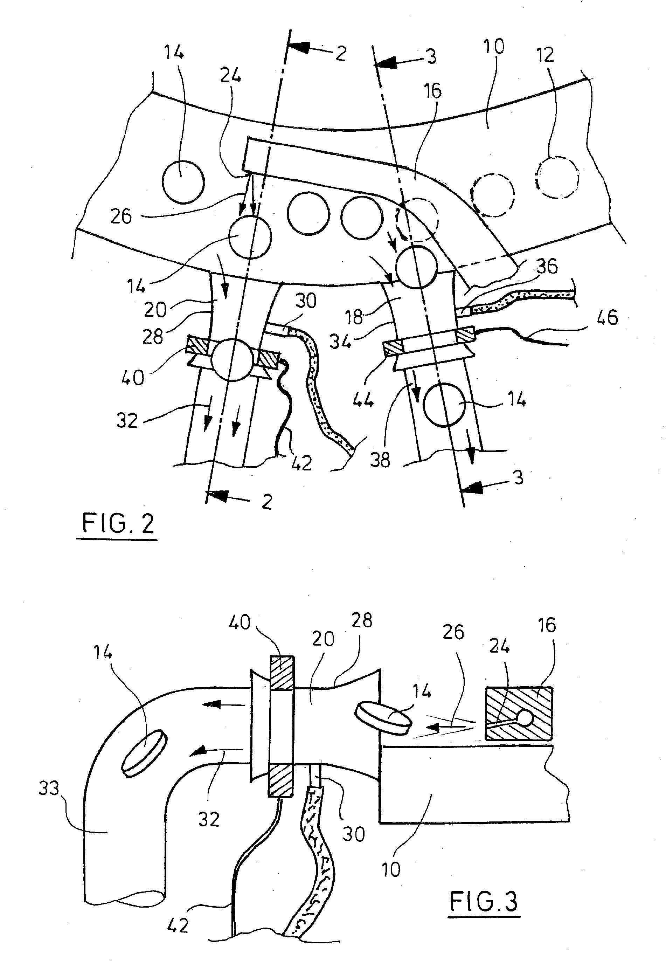

Nach dem Erzeugen der Tabletten 14 werden diese durch die Unterstempel 13 aus den Matrizenbohrungen 12 ausgestoßen, so dass sie sich auf der Oberseite der Matrizenscheibe 10 befinden. Der Matrizenscheibe 10 ist ein Abstreifer 16 mit einer sichelförmigen Ablenkfläche zugeordnet, unter dem die Matrizenscheibe 10 hindurch dreht. Wie insbesondere in Fig. 2 gut zu erkennen, streift der Abstreifer 16 die auf der Oberseite der Matrizenscheibe 10 befindlichen Tabletten 14 in Richtung eines Gutkanals 18 ab. In Drehrichtung der Matrizenscheibe 10 befindet sich vor dem Gutkanal 18 ein Schlechtkanal 20. Dem Schlechtkanal 20 gegenüberliegend ist in den Abstreifer 16 eine Auswerfdüse 24 integriert. Wird die Auswerfdüse 24 aktiviert, erzeugt sie einen Luftstoß in Richtung des Schlechtkanals 20, wie in den Figuren 2 und 3 bei dem Bezugszeichen 26 veranschaulicht. Dieser Luftstoß lenkt eine sich im Bereich der Auswerfdüse 24 befindende Tablette 14 vor Erreichen des Abstreifers 16 in den Schlechtkanal 20 ab. Die Auswerfdüse 24 wird von einer nicht näher dargestellten Steuereinrichtung, beispielsweise der Maschinensteuerung der Rundläufertablettenpresse, aktiviert, wenn die Steuereinrichtung von einer ebenfalls nicht näher dargestellten Prüfeinrichtung, beispielsweise einer Presskraftmesseinrichtung, der Rundläufertablettenpresse ein Schlechtsignal erhält. Die Prüfeinrichtung prüft beispielsweise die beim Erzeugen der Tabletten 14 erzeugte Presskraft und erzeugt ein Schlechtsignal, wenn die Presskraft von einem Sollwert in unzulässiger Weise abweicht. Dieser grundsätzliche Aufbau ist bekannt und soll daher nicht näher erläutert werden.

In dem Schlechtkanal 20 befindet sich erfindungsgemäß eine erste Unterdruckeinrichtung 28, insbesondere eine Venturi-Düse, mit einer Querschnittsverengung, in deren Bereich ein Saugrohrabschnitt 30 angeschlossen ist. Im Betrieb erzeugt die durch die Querschnittsverengung der Unterdruckeinrichtung 28 strömende Luft im Bereich der Querschnittsverengung einen Unterdruck, so dass über den Saugrohrabschnitt 30 Luft angesaugt und in Förderrichtung von der Matrizenscheibe 10 weg durch den Schlechtkanal 20 mitgerissen wird, wie durch die Pfeile 32 veranschaulicht. Dadurch werden von der Auswerfdüse 24 in den Schlechtkanal 20 geleitete Tabletten 14 ebenfalls mitgerissen und durch den Schlechtkanal 20 ab gefördert in einen in Fig. 3 bei dem Bezugszeichen 33 gezeigten Kanalabschnitt, der beispielsweise zu einem Schlechtbehälter 17 für auszusortierende Tabletten führt. Aus diesem Schlechtbehälter 17 können die Tabletten 14 anschließend entnommen werden.

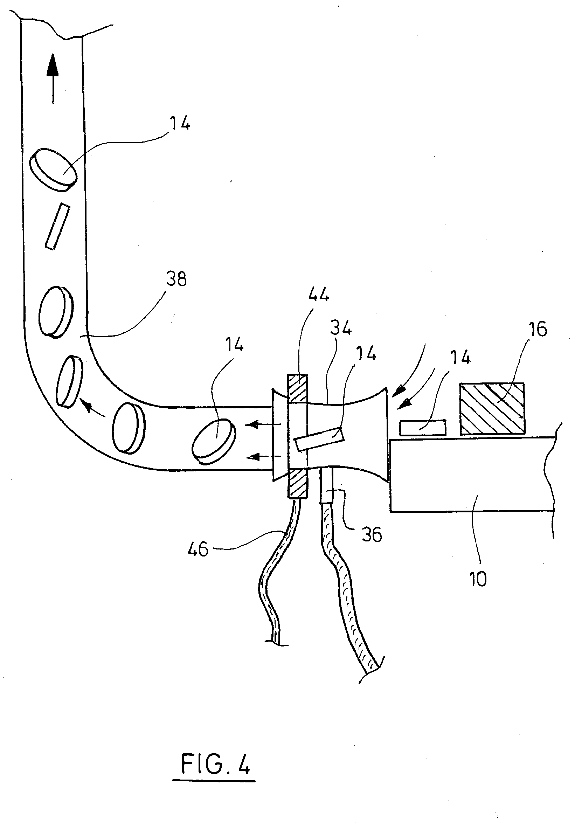

In dem Gutkanal 18, in den der Abstreifer 16 durch die Auswerfdüse 24 nicht aussortierte Tabletten 14 fördert, befindet sich eine zweite Unterdruckeinrichtung 34, insbesondere eine Venturi-Düse, mit einer Querschnittsverengung, in deren Bereich wiederum ein Saugrohrabschnitt 36 angeschlossen ist. Wie bei der ersten Unterdruckeinrichtung 28 führt auch die Querschnittsverengung der zweiten Unterdruckeinrichtung 34 dazu, dass durch diese strömende Luft einen Unterdruck erzeugt, der über den Saugrohrabschnitt 36 Luft ansaugt, die dann wiederum in Förderrichtung von der Matrizenscheibe 10 weg durch den Gutkanal 18 mitgerissen wird, wie durch den Pfeil 38 veranschaulicht. Dadurch werden in dem gezeigten Beispiel sämtliche vollständig durch die Unterstempel 13 aus den Matrizenbohrungen 12 ausgestoßenen Tabletten, die nicht in den Schlechtkanal 20 abgelenkt wurden, von der Matrizenscheibe in den Gutkanal 18 abgesaugt und durch den Gutkanal 18 hindurch abgefördert in einen Steigkanalabschnitt 38 eines sich an den Gutkanal 18 anschließenden Förderkanals. Der Förderkanal kann aus Förderrohren gebildet sein. Wie insbesondere in Fig. 4 zu erkennen, führt der Steigkanalabschnitt 38 gegenüber der zweiten Unterdruckeinrichtung 34 auf ein größeres Höhenniveau. Gegebenenfalls können im weiteren Verlauf des Förderkanals eine oder mehrere weitere Unterdruckeinrichtungen vorgesehen sein.

In der ersten Unterdruckeinrichtung 28 befindet sich in Strömungsrichtung kurz hinter dem Anschluss des Saugrohrabschnitts 30 eine Rohrlichtschranke 40. Über eine Leitung 42 ist diese beispielsweise mit der Maschinensteuerung der Rundläufertablettenpresse verbunden. In der zweiten Unterdruckeinrichtung 34 befindet sich in Strömungsrichtung kurz hinter dem Anschluss des Saugrohrabschnitts 36 ebenfalls eine Rohrlichtschranke 44, die über eine Leitung 46 ebenfalls beispielsweise mit der Maschinensteuerung der Rundläufertablettenpresse verbunden ist. Die Lichtschranken 40, 44 detektieren vorbeigeförderte Tabletten 14. Insbesondere detektiert die in der ersten Unterdruckeinrichtung 28 vorgesehene Lichtschranke 40 eine von der Auswerfdüse 24 aussortierte und in den Schlechtkanal 20 geleitete Tablette 14 und die in der zweiten Unterdruckeinrichtung 34 angeordnete Lichtschranke 44 detektiert entsprechend eine Lücke in dem von dem Abstreifer 16 in den Gutkanal 18 geleiteten Tablettenstrom 14. Auf diese Weise wird eine zuverlässige redundante Detektion der aussortierten Tabletten gewährleistet.

Wie insbesondere in Figur 1 zu erkennen, mündet der Steigkanalabschnitt 38 in einen auf ein geringeres Höhenniveau führenden Fallkanalabschnitt 48 des Förderkanals, durch den die durch den Steigkanalabschnitt 38 in den Fallkanalabschnitt 48 gelangten Tabletten 14 schwerkraftbedingt weitergefördert werden. Mit dem Fallkanalabschnitt 48 ist ein Absaugkanal 50 verbunden, welcher wiederum mit einer nicht näher dargestellten Absaugpumpe verbunden ist. Die Absaugpumpe saugt über den Absaugkanal 50 Gas aus dem Fallkanalabschnitt 48 entgegen der Förderrichtung der Tabletten 14 ab. Hierdurch erfolgt einerseits ein Abbremsen der Tabletten 14 auf eine gewünschte Fallgeschwindigkeit. Andererseits erfolgt auf diese Weise eine weitere Entstaubung der Tabletten 14. Bei dem Bezugszeichen 52 ist in Figur 1 gestrichelt ein zweiter Steigkanalabschnitt gezeigt. Dieser kann beispielsweise bei einer Ausgestaltung der Rundläuferpresse als Doppelrundläuferpresse von einem zweiten Tablettenablauf der Presse kommen. Der zweite Tablettenablauf kann in gleicher Weise ausgestaltet sein wie oben zu dem ersten Tablettenablauf erläutert. In dem Fallkanalabschnitt 48 ist eine Erstmusterweiche 54 angeordnet, durch die Tabletten 14 beispielsweise für Stichprobenmessungen einem Erstmusterbehälter 56 zugeführt werden können. Stromab der Erstmusterweiche 54 mündet der Fallkanalabschnitt 48 in ein Entstaubungs- und Entgratungsgerät 58, beispielsweise ein mechanisches Siebtrommel-Entstaubungs- und Entgratungsgerät. Das Entstaubungs- und Entgratungsgerät 58 ist auf einem höhenverstellbaren Ständer 60 angeordnet, der wiederum über einen Fuß 62 mit feststellbaren Rollen 64 auf dem Untergrund aufsteht. Über eine Entstaubungsleitung 66 wird im Entstaubungs- und Entgratungsgerät 58 anfallender Tablettenstaub abgesaugt. Bei dem Bezugszeichen 68 ist eine Luftlanze gezeigt.

An das Entstaubungs- und Entgratungsgerät 58 schließt sich ein weiterer Fallkanalabschnitt 70 des Förderkanals an, über den die in dem Entstaubungs- und Entgratungsgerät 58 entstaubten und entgrateten Tabletten 14 einem Sammelbehälter 72 zur weiteren Verwendung, insbesondere Verpackung, zugeführt werden. In dem zweiten Fallkanalabschnitt 70 kann ein Metalldetektor 74 angeordnet sein. Detektiert dieser Metallrückstände, wird eine Metallaussortierweiche 76 aktiviert und die entsprechenden Tabletten werden einem Metallausschussbehälter 78 zugeführt. Weiter stromab befindet sich in dem zweiten Fallkanalabschnitt 70 eine Probenzugweiche 80, durch deren Aktivierung Tabletten 14 einem Tablettenprüfgerät 82 zugeführt werden können, welches verschiedene, interessierende Parameter messen kann, beispielsweise Gewicht, Dicke, Härte und Durchmesser der Tabletten 14.

Für ein Reinigen des erfindungsgemäßen Pressensystems kann an einer oder mehreren Stellen des Förderkanals Reinigungsflüssigkeit über eine Reinigungsleitung zugeführt werden. Beispielsweise kann über den Saugrohrabschnitt 36 Reinigungsflüssigkeit zur Reinigung der Unterdruckeinrichtung 34 und des Steigkanalabschnitts 38 eingeleitet werden. Auch kann beispielsweise im Bereich des ersten Fallkanalabschnitts 48 Reinigungsflüssigkeit über eine geeignete Reinigungsleitung zugeführt werden.

Außerdem ist es möglich, dass der Förderkanal sowie das Entstaubungs- und Entgratungsgerät 58 und ggf. weitere Komponenten des in Figur 1 gezeigten Pressensystems in einem gasdichten Isolierraum angeordnet sind, dessen Atmosphäre über eine Abluft- und eine Zuluftleitung ausgetauscht werden kann. Der Tablettenablauf der Rundläufertablettenpresse kann dann gasdicht mit dem Förderkanal verbunden sein.

## Patentansprüche

1. Rundläufertablettenpresse, umfassend einen drehend angetriebenen Rotor mit einer Matrizenscheibe (10) mit Matrizenbohrungen (12) und einer Mehrzahl von mit der Matrizenscheibe (10) umlaufenden Ober- und Unterstempeln zum Erzeugen von Tabletten (14) in den Matrizenbohrungen (12), wobei der Matrizenscheibe (10) des Rotors ein Abstreifer (16) zugeordnet ist, der in den Matrizenbohrungen (12) erzeugte und durch die Unterstempel aus den Matrizenbohrungen (12) ausgestoßene Tabletten (14) von der Oberseite der Matrizenplatte in einen Gutkanal (18) lenkt, wobei in Drehrichtung des Rotors vor dem Gutkanal (18) ein Schlechtkanal (20) angeordnet ist, dem eine Aussortiereinrichtung (24) zum Aussortieren von Tabletten in den Schlechtkanal (20) zugeordnet ist, wobei ferner eine Prüfeinrichtung an der Rundläufertablettenpresse angeordnet ist, welche mindestens eine Eigenschaft der in den Matrizenbohrungen (12) erzeugten Tabletten (14) überprüft und ein Schlechtsignal für eine Steuereinrichtung erzeugt, wenn die geprüfte Eigenschaft einer Tablette von einem Sollwert unzulässig abweicht, so dass die Steuereinrichtung die Aussortiereinrichtung (24) zur Aussortierung der betreffenden Tablette betätigt, **dadurch gekennzeichnet, dass** in dem Schlechtkanal (20) eine erste Unterdruckeinrichtung (28) derart angeordnet ist, dass durch die Aussortiereinrichtung (24) in Richtung des Schlechtkanals (20) geleitete Tabletten (14) durch den von der ersten Unterdruckeinrichtung (28) erzeugten Unterdruck durch den Schlechtkanal (20) abgefördert werden, und **dadurch gekennzeichnet, dass** in dem Gutkanal (18) eine zweite Unterdruckeinrichtung (34) derart angeordnet ist, dass durch den Abstreifer (16) in Richtung des Gutkanals (18) geleitete Tabletten (14) durch den von der zweiten Unterdruckeinrichtung (34) erzeugten Unterdruck von der Matrizenscheibe abgesaugt und durch den Gutkanal (18) abgefördert werden.

2. Rundläufertablettenpresse nach Anspruch 1, **dadurch gekennzeichnet, dass** die erste Unterdruckeinrichtung (28) eine Venturi-Düse ist und/oder dass die zweite Unterdruckeinrichtung (34) eine Venturi-Düse ist.

3. Rundläufertablettenpresse nach einem der vorhergehenden Ansprüche, **dadurch gekennzeichnet, dass** der Gutkanal (18) stromab der zweiten Unterdruckeinrichtung (34) in einen Förderkanal mündet.

4. Rundläufertablettenpresse nach Anspruch 3, **dadurch gekennzeichnet, dass** der Förderkanal stromab der zweiten Unterdruckeinrichtung (34) einen auf ein gegenüber der zweiten Unterdruckeinrichtung (34) größeres Höhenniveau führenden Steigkanalabschnitt (38) umfasst.

5. Rundläufertablettenpresse nach Anspruch 4, **dadurch gekennzeichnet, dass** sich an den Steigkanalabschnitt (38) ein auf ein geringeres Höhenniveau führender Fallkanalabschnitt (48) des Förderkanals anschließt, durch den die Tabletten (14) schwerkraftbedingt gefördert werden.

6. Rundläufertablettenpresse nach Anspruch 5, **dadurch gekennzeichnet, dass** mit dem Fallkanalabschnitt (48) ein Absaugkanal (50) verbunden ist, der wiederum mit einer Absaugpumpe verbunden ist, die über den Absaugkanal Gas aus dem Fallkanalabschnitt (48) entgegen der Förderrichtung der Tabletten (14) absaugt.

7. Rundläufertablettenpresse nach einem der Ansprüche 3 bis 6, **dadurch gekennzeichnet, dass** der Förderkanal mit einem Tablettenentstaubungs- und/oder -entgratungsgerät (58) verbunden ist, dem die durch den Förderkanal geförderten Tabletten (14) zugeführt werden, wobei das Tablettenentstaubungs- und/oder -entgratungsgerät (58) wiederum mit einem Sammelbehälter (72) verbunden ist, dem durch das Tablettenentstaubungs- und/oder -entgratungsgerät (58) geförderte Tabletten (14) zugeführt werden.

8. Rundläufertablettenpresse nach Anspruch 7, **dadurch gekennzeichnet, dass** das Tablettenentstaubungs- und/oder -entgratungsgerät (58) ein mechanisches Entstaubungs- und/oder -Entgratungsgerät (58) ist.

9. Rundläufertablettenpresse nach einem der Ansprüche 3 bis 8, **dadurch gekennzeichnet, dass** in dem Förderkanal eine Weiche (80) angeordnet ist, über die Tabletten (14) aus dem Förderkanal entnommen und einem mit der Weiche (80) verbundenen Tablettenprüfgerät (82) zugeführt werden können.

10. Rundläufertablettenpresse nach einem der Ansprüche 3 bis 9, **dadurch gekennzeichnet, dass** der Förderkanal sowie ein gegebenenfalls vorgesehenes Entstaubungs- und/oder -Entgratungsgerät (58) in einem gasdichten Isolierraum angeordnet sind, dessen Atmosphäre über eine Abluftleitung und eine Zuluftleitung ausgetauscht werden kann, wobei der Tablettenablauf der Rundläufertablettenpresse gasdicht mit dem Förderkanal verbunden ist.

11. Rundläufertablettenpresse nach Anspruch 10, **dadurch gekennzeichnet, dass** die gasdichte Verbindung des Tablettenablaufs mit dem Förderkanal eine aufblasbare Dichtung umfasst.

12. Rundläufertablettenpresse nach einem der vorhergehenden Ansprüche, **dadurch gekennzeichnet, dass** in dem Schlechtkanal (20) eine erste Detektoreinrichtung angeordnet ist, die durch den Schlechtkanal (20) geleitete Tabletten (14) detektiert und/oder dass in dem Gutkanal (18) eine zweite Detektoreinrichtung angeordnet ist, die durch den Gutkanal (18) geleitete Tabletten (14) detektiert.

13. Rundläufertablettenpresse nach Anspruch 12, **dadurch gekennzeichnet, dass** die erste Detektoreinrichtung eine Lichtschranke (40) umfasst und/oder dass die zweite Detektoreinrichtung eine Lichtschranke (44) umfasst.

14. Rundläufertablettenpresse nach einem der Ansprüche 12 oder 13, **dadurch gekennzeichnet, dass** die erste Detektoreinrichtung in der ersten Unterdruckeinrichtung (28) angeordnet ist und/oder dass die zweite Detektoreinrichtung in der zweiten Unterdruckeinrichtung (34) angeordnet ist.

15. Rundläufertablettenpresse nach einem der vorhergehenden Ansprüche, **dadurch gekennzeichnet, dass** weiterhin eine Reinigungseinrichtung vorgesehen ist mit einer an den Gutkanal (18) und/oder den Schlechtkanal (20) und/oder die erste Unterdruckeinrichtung (28) und/oder die zweite Unterdruckeinrichtung (34) anschließbaren Reinigungsleitung und einer Reinigungsflüssigkeitsversorgung, über die der Reinigungsleitung eine Reinigungsflüssigkeit zur Reinigung zugeführt werden kann.

16. Rundläufertablettenpresse nach einem der vorhergehenden Ansprüche, **dadurch gekennzeichnet, dass** sie weiterhin eine Unterdrucksteuereinrichtung umfasst, die den von der ersten Unterdruckeinrichtung (28) erzeugten Unterdruck und den von der zweiten Unterdruckeinrichtung (34) erzeugten Unterdruck steuert, wobei die Unterdrucksteuereinrichtung den von der ersten Unterdruckeinrichtung (28) erzeugten Unterdruck und den von der zweiten Unterdruckeinrichtung (34) erzeugten Unterdruck unabhängig voneinander einstellen kann.

17. Rundläufertablettenpresse nach einem der vorhergehenden Ansprüche, **dadurch gekennzeichnet, dass** sie eine Mehrfachrundläufertablettenpresse ist und mehrere Paare von Gutkanal (18) und Schlechtkanal (20) besitzt, wobei jedem Gutkanal (18) ein Abstreifer (16) und jedem Schlechtkanal (20) eine Aussortiereinrichtung (24) zum Aussortieren von Tabletten in den Schlechtkanal zugeordnet ist, wobei eine Steuereinrichtung auf Grundlage eines von einer Prüfeinrichtung erzeugten Schlechtsignals die jeweilige Aussortiereinrichtung (24) zur Aussortierung der betreffenden Tablette betätigt, und wobei in jedem Schlechtkanal (20) eine erste Unterdruckeinrichtung (28) derart angeordnet ist, dass durch die jeweilige Aussortiereinrichtung (24) in Richtung des jeweiligen Schlechtkanals (20) geleitete Tabletten (14) durch den von der jeweiligen ersten Unterdruckeinrichtung (28) erzeugten Unterdruck durch den jeweiligen Schlechtkanal (20) abgefördert werden, und dass in jedem Gutkanal (18) eine zweite Unterdruckeinrichtung (34) derart angeordnet ist, dass durch den jeweiligen Abstreifer (16) in Richtung des jeweiligen Gutkanals (18) geleitete Tabletten (14) durch den von der jeweiligen zweiten Unterdruckeinrichtung (34) erzeugten Unterdruck von der Matrizenscheibe abgesaugt und durch den jeweiligen Gutkanal (18) abgefördert werden.

## Claims

1. A rotary tablet press, comprising a rotatably driven rotor having a die plate (10) with die bores (12) and a plurality of upper and lower punches revolving with the die plate (10) for producing tablets (14) in the die bores (12), wherein the die plate (10) of the rotor is assigned a scraper (16) which steers tablets (14) which are produced in the die bores (12) and ejected by the lower punches from the die bores (12), from the upper side of the die plate into a satisfactory channel (18), wherein in the rotational direction of the rotor a reject channel (20) is arranged upstream of the satisfactory channel (18), a sorting apparatus (24) being assigned to said reject channel for sorting tablets into the reject channel (20), wherein an inspection apparatus is additionally arranged on the rotary tablet press, said inspection apparatus inspecting at least one property of the tablets (14) produced in the die bores (12) and producing a reject signal for a control apparatus when the inspected property of a tablet deviates inadmissibly from a nominal value, so that the control apparatus actuates the sorting apparatus (24) in order to sort the relevant tablet, **characterized in that** a first vacuum apparatus (28) is arranged in the reject channel (20) such that tablets (14) conducted by the sorting apparatus (24) in the direction of the reject channel (20) are discharged by the vacuum produced by the first vacuum apparatus (28) through the reject channel (20), and **characterized in that** a second vacuum apparatus (34) is arranged in the satisfactory channel (18) such that tablets (14) conducted by the scraper (16) in the direction of the satisfactory channel (18) are suctioned from the die plate by the vacuum produced by the second vacuum apparatus (34) and discharged through the satisfactory channel (18).

2. The rotary tablet press according to Claim 1, **characterized in that** the first vacuum apparatus (28) is a Venturi nozzle and/or the second vacuum apparatus (34) is a Venturi nozzle.

3. The rotary tablet press according to any one of the preceding claims, **characterized in that** the satisfactory channel (18) opens into a conveyor channel downstream of the second vacuum apparatus (34).

4. The rotary tablet press according to Claim 3, **characterized in that** the conveyor channel comprises a rising channel portion (38) leading to a higher height level relative to the second vacuum apparatus (34) downstream of the second vacuum apparatus (34).

5. The rotary tablet press according to Claim 4, **characterized in that** a falling channel portion (48) of the conveyor channel, which leads to a lower height level, is attached to the rising channel portion (38), through which falling channel portion the tablets (14) are conveyed as a result of gravity.

6. The rotary tablet press according to Claim 5, **characterized in that** a suction channel (50) is connected to the falling channel portion (48), which is in turn connected to a suction pump which suctions gas via the suction channel from the falling channel portion (48) in the opposition direction to the conveying direction of the tablets (14).

7. The rotary tablet press according to any one of Claims 3 to 6, **characterized in that** the conveyor channel is connected to a tablet dedusting and/or deburring unit (58), to which the tablets (14) conveyed through the conveyor channel are supplied, wherein the tablet dedusting and/or deburring unit (58) is, in turn, connected to a reservoir (72), to which tablets (14) conveyed by the tablet dedusting and/or deburring unit (58) are supplied.

8. The rotary tablet press according to Claim 7, **characterized in that** the tablet dedusting and/or deburring unit (58) is a mechanical dedusting and/or deburring unit (58).

9. The rotary tablet press according to any one of Claims 3 to 8, **characterized in that** a diverter (80) is arranged in the conveyor channel, via which tablets (14) are extracted from the conveyor channel and can be supplied to a tablet inspection unit (82) connected to the diverter (80).

10. The rotary tablet press according to any one of Claims 3 to 9, **characterized in that** the conveyor channel and, if applicable, a provided dedusting and/or deburring unit (58) are arranged in a gas-tight insulating chamber, the atmosphere of which can be exchanged via an exhaust airline and an inlet airline, wherein the tablet flow of the rotary tablet press is connected in a gas-tight manner to the conveyor channel.

11. The rotary tablet press according to Claim 10, **characterized in that** the gas-tight connection of the tablet flow to the conveyor channel comprises an inflatable seal.

12. The rotary tablet press according to any one of the preceding claims, **characterized in that** a first detector apparatus is arranged in the reject channel (20), which detects tablets (14) conducted through the reject channel (20), and/or a second detector apparatus is arranged in the satisfactory channel (18), which detects tablets (14) conducted through the satisfactory channel (18).

13. The rotary tablet press according to Claim 12, **characterized in that** the first detector apparatus comprises a light barrier (40) and/or the second detector apparatus comprises a light barrier (44).

14. The rotary tablet press according to any one of Claims 12 or 13, **characterized in that** the first detector apparatus is arranged in the first vacuum apparatus (28) and/or the second detector apparatus is arranged in the second vacuum apparatus (34).

15. The rotary tablet press according to any one of the preceding claims, **characterized in that** a cleaning apparatus is furthermore provided, which has a cleaning line which can be attached to the satisfactory channel (18) and/or the reject channel (20) and/or the first vacuum apparatus (28) and/or the second vacuum apparatus (34) and a cleaning fluid supply, via which a cleaning fluid can be supplied to the cleaning line for cleaning.

16. The rotary tablet press according to any one of the preceding claims, **characterized in that** it furthermore comprises a vacuum control apparatus which controls the vacuum produced by the first vacuum apparatus (28) and the vacuum produced by the second vacuum apparatus (34), wherein the vacuum control apparatus can adjust the vacuum produced by the first vacuum apparatus (28) and the vacuum produced by the second vacuum apparatus (34) independently of one another.

17. The rotary tablet press according to any one of the preceding claims, **characterized in that** it is a multi-station rotary tablet press and has multiple pairs of satisfactory channels (18) and reject channels (20), wherein each satisfactory channel (18) is assigned a scraper (16) and each reject channel (20) is assigned a sorting apparatus (24) for sorting tablets into the reject channel, wherein a control apparatus actuates, on the basis of a reject signal produced by an inspection apparatus, the respective sorting apparatus (24) in order to sort the relevant tablet, and wherein a first vacuum apparatus (28) is arranged in each reject channel (20) such that tablets (14) conducted by the respective sorting apparatus (24) in the direction of the respective reject channel (20) are discharged by the vacuum produced by the respective first vacuum apparatus (28) through the respective reject channel (20), and a second vacuum apparatus (34) is arranged in each satisfactory channel (18) such that tablets (14) conducted by the respective scraper (16) in the direction of the respective satisfactory channel (18) are suctioned from the die plate by the vacuum produced by the respective second vacuum apparatus (34) and discharged through the respective satisfactory channel (18).

## Revendications

1. Presse rotative pour comprimés, comportant un rotor entraîné de façon rotative, avec un disque à matrice (10) et des alésages de matrice (12) et une pluralité de tampons supérieurs et inférieurs tournant avec le disque à matrice (10) pour produire des comprimés (14) dans les alésages de matrice (12), dans laquelle un racloir (16) est attribué au disque à matrice (10) du rotor, lequel dirige des comprimés (14) produits dans les alésages de matrice (12) et expulsés hors des alésages de matrice (12) par les tampons inférieurs à partir de la face supérieure de la plaque de matrice vers un canal de bon (18), dans laquelle un canal de mauvais (20) est disposé avant le canal de bon (18) dans la direction de rotation du rotor, auquel est attribué un dispositif de tri (24) destiné à trier des comprimés vers le canal de mauvais (20), dans laquelle un dispositif de vérification est en outre disposé sur la presse rotative pour comprimés, lequel vérifie au moins une propriété des comprimés (14) produits dans les alésages de matrice (12) et produit un signal de mauvais pour un dispositif de commande, lorsque la propriété vérifiée d'un comprimé s'écarte de façon non autorisée d'une valeur de consigne, de telle façon que le dispositif de commande actionne le dispositif de tri (24) pour le tri du comprimé en question, **caractérisée en ce qu'**un premier dispositif à dépression (28) est disposé de telle façon dans le canal de mauvais (20), que des comprimés (14) guidés vers le canal de mauvais (20) par le dispositif de tri (24) sont évacués à travers le canal de mauvais (20) du fait de la dépression produite par le premier dispositif à dépression (28), et **caractérisée en ce que**
- un deuxième dispositif à dépression (34) est disposé de telle façon dans le canal de bon (18), que des comprimés (14) guidés vers le canal de bon (18) par le racleur (16) sont aspirés par le disque à matrice du fait de la dépression produite par le deuxième dispositif à dépression (34) et évacués à travers le canal de bon (18).

2. Presse rotative pour comprimés selon la revendication 1, **caractérisée en ce que** le premier dispositif à dépression (28) est une buse venturi et/ou **en ce que** le deuxième dispositif à dépression (34) est une buse venturi.

3. Presse rotative pour comprimés selon l'une des revendications précédentes, **caractérisée en ce que** le canal de bon (18) débouche sur un canal de transport en aval du deuxième dispositif à dépression (34).

4. Presse rotative pour comprimés selon la revendication 3, **caractérisée en ce que** le canal de transport comporte, en aval du deuxième dispositif à dépression (34), une section de canal montante (38) menant à un niveau de hauteur supérieur par rapport au deuxième dispositif à dépression (34) .

5. Presse rotative pour comprimés selon la revendication 4, **caractérisée en ce qu'**une section de canal descendante (48) menant à un niveau de hauteur inférieur, à travers laquelle les comprimés (14) sont transportés par gravité, prolonge la section de canal montante (38).

6. Presse rotative pour comprimés selon la revendication 5, **caractérisée en ce qu'**un canal d'aspiration (50) est relié à la section de canal descendante (48), lequel est quant à lui relié à une pompe d'aspiration aspirant du gaz à partir de la section de canal descendante (48) contre la direction de transport des comprimés (14) par le biais du canal d'aspiration.

7. Presse rotative pour comprimés selon l'une des revendications 3 à 6, **caractérisée en ce que** le canal de transport est relié à un appareil de dépoussiérage et/ou d'ébavurage de comprimés (58), vers lequel sont acheminés les comprimés (14) transportés à travers le canal de transport, dans laquelle l'appareil de dépoussiérage et/ou d'ébavurage de comprimés (58) est quant à lui relié à un récipient de collecte (72), vers lequel sont acheminés des comprimés (14) transportés à travers l'appareil de dépoussiérage et/ou d'ébavurage de comprimés (58).

8. Presse rotative pour comprimés selon la revendication 7, **caractérisée en ce que** l'appareil de dépoussiérage et/ou d'ébavurage de comprimés (58) est un appareil de dépoussiérage et/ou d'ébavurage de comprimés (58) mécanique.

9. Presse rotative pour comprimés selon l'une des revendications 3 à 8, **caractérisée en ce qu'**un séparateur (80) est disposé dans le canal de transport, par le biais duquel les comprimés (14) peuvent être retirés du canal de transport et acheminés vers un appareil de vérification de comprimés (82) relié au séparateur (80).

10. Presse rotative pour comprimés selon l'une des revendications 3 à 9, **caractérisée en ce que** le canal de transport ainsi qu'un appareil de dépoussiérage et/ou d'ébavurage de comprimés (58) également prévu sont disposés dans une chambre isolante étanche au gaz, dont l'atmosphère peut être remplacée par le biais d'un conduit d'air sortant et un conduit d'air entrant, dans laquelle la sortie de comprimés de la presse rotative pour comprimés est relié de façon étanche au gaz au canal de transport.

11. Presse rotative pour comprimés selon la revendication 10, **caractérisée en ce que** la liaison étanche au gaz entre la sortie de comprimés et le canal de transport comporte un dispositif d'étanchéité gonflable.

12. Presse rotative pour comprimés selon l'une des revendications précédentes, **caractérisée en ce qu'**un premier dispositif de détection détectant des comprimés (14) guidés à travers le canal de mauvais (20) est disposé dans le canal de mauvais (20) et/ou **en ce qu'**un deuxième dispositif de détection détectant des comprimés (14) guidés à travers le canal de bon (18) est disposé dans le canal de bon (18).

13. Presse rotative pour comprimés selon la revendication 12, **caractérisée en ce que** le premier dispositif de détection comporte une barrière lumineuse (40) et/ou **en ce que** le deuxième dispositif de détection comporte une barrière lumineuse (44).

14. Presse rotative pour comprimés selon l'une des revendications 12 ou 13, **caractérisée en ce que** le premier dispositif de détection est disposé dans le premier dispositif à dépression (28) et/ou **en ce que** le deuxième dispositif de détection est disposé dans le deuxième dispositif à dépression (34).

15. Presse rotative pour comprimés selon l'une des revendications précédentes, **caractérisée en ce qu'**il est également prévu un dispositif de nettoyage, avec un conduit de nettoyage apte à être raccordé au canal de bon (18) et/ou au canal de mauvais (20) et/ou au premier dispositif à dépression (28) et/ou au deuxième dispositif à dépression (34), et une alimentation en liquide de nettoyage permettant d'alimenter un liquide de nettoyage par le biais du conduit de nettoyage pour le nettoyage.

16. Presse rotative pour comprimés selon l'une des revendications précédentes, **caractérisée en ce que** celle-ci comporte également un dispositif de commande de dépression, lequel commande la dépression produite par le premier dispositif à dépression (28) et la dépression produite par le deuxième dispositif à dépression (34), dans laquelle le dispositif de commande de dépression est capable de régler séparément la dépression produite par le premier dispositif à dépression (28) et la dépression produite par le deuxième dispositif à dépression (34).

17. Presse rotative pour comprimés selon l'une des revendications précédentes, **caractérisée en ce que** celle-ci est une presse rotative pour comprimés multiple et possède plusieurs paires de canal de bon (18) et de canal de mauvais (20), dans laquelle un racleur (16) est attribué à chaque canal de bon (18) et un dispositif de tri (24) est attribué à chaque canal de mauvais (20) pour le tri de comprimés dans le canal de mauvais, dans laquelle un dispositif de commande actionne le dispositif de tri (24) respectif sur la base d'un signal de mauvais produit par un dispositif de vérification pour le tri du comprimé en question, et dans laquelle un premier dispositif à dépression (28) est disposé de telle façon dans chaque canal de mauvais (20), que des comprimés (14) guidés vers le canal de mauvais (20) respectif par le dispositif de tri (24) respectif sont évacués à travers le canal de mauvais (20) respectif du fait de la dépression produite par le premier dispositif à dépression (28) respectif, et qu'un deuxième dispositif à dépression (34) est disposé de telle façon dans chaque canal de bon (18), que des comprimés (14) guidés vers le canal de bon (18) respectif par le racleur (16) respectif sont aspirés par le disque à matrice du fait de la dépression produite par le deuxième dispositif à dépression (34) respectif et évacués à travers le canal de bon (18) respectif.
